# EUROPEAN PATENT APPLICATION

(11) **EP 4 838 876 A1**
(43) Date of publication of application: **11.11.2026**
(21) Application number: 26176843.6
(22) Date of filing: 06.05.2026
(51) Int. Cl.: H04N 5/222, G06F 8/30, G06F 9/455, H04N 21/81, H04N 21/6377

(54) **REAL-TIME VIDEO PRODUCTION ENGINE WITH AN INTERFACE AUTOMATION SCRIPT**

(30) Priority: 08.05.2025 US 202519202946
(71) Applicant: eBay Inc., San Jose, CA 95125 (US)
(72) Inventor: MA, Yan, San Jose, 95125 (US); LIU, Ze Wen, San Jose, 95125 (US); WANG, Yufei, San Jose, 95125 (US); XIE, Feng, San Jose, 95125 (US); ZANG, Xiaojie, San Jose, 95125 (US); HUANG, Xiwei, San Jose, 95125 (US); YU, Kun, San Jose, 95125 (US)
(74) Representative: Müller-Boré & Partner Patentanwälte PartG mbB

(57) **Abstract**

Methods, systems, and computer storage media for providing a video production engine in a digital platform are described. The video production engine is designed to automatically generate videos, such as product demo videos, UX/UI tutorials and product tutorials. This video production engine leverages an interface automation script to automate interactions with an interface while generating the video. In operation, an interface automation script associated with a plurality of interface interactions with an interface is configured. The interface automation script supports embedding Application Programming Interfaces (APIs) for real-time interaction and real-time processing video processing. One or more video production engine API controls into the interface automation script. Using the one or more API controls, one or more video elements are incorporated into the interface automation script. Based on the interface automation script, a real-time interaction and real-time video processing, post-processing with a video adapter is triggered. An output video is generated.

## Description

### BACKGROUND

Users can interact with automated multimedia content generation systems by providing structured input to assist in the creation, editing, and assembly of multimedia elements like video, audio, and subtitles. Automated multimedia content generation refers to the process of using software-driven methods, such as scripts, predefined workflows, and manual editing tools, to produce digital media content-including videos, images, audio, and text-though significant human intervention is still required at various stages. For example, a software developer creating a product demo video might record user interactions on an interface (e.g., a browser), but they would then manually add subtitles, synchronize voice narration, and edit the video using separate software tools. When the product UI changes, they must re-record the video, reapply edits, and manually adjust subtitles and narration to reflect the updates. As such, automated multimedia content generation technologies provided some assistance in streamlining content creation but still relied on manual processes for editing, synchronization, and updating multimedia elements.

### SUMMARY

Various aspects of the technology described herein are generally directed to systems, methods, and computer storage media for, among other things, providing a video production engine designed to automatically generate videos, such as product demo videos, UX/UI tutorials, product tutorials, and feature demonstration videos. This video production engine leverages an interface automation script to automate interactions with an interface while generating the video. The video production engine acts as a development toolkit, offering a set of APIs that control the video production lifecycle within interface automation scripts. Example functions include startVideoRecording(), addSubtitles(), startStopRecordingVideo(), screenHighlight(), and stopVideoRecording(). The video production engine also includes a video elements generator that works with an interface automated script framework, enabling the generation of video elements such as video content, screen transitions, subtitle text, and audio, all based on the interface automation script. The video production engine incorporates video processing adapters that implement a Service Provider Interface (SPI) of the video production engine Software Development Kit (SDK). The video processing adapters handle post-processing tasks, such as merging video, audio, and subtitle files into a cohesive final video.

In operation, an interface automation script associated with a plurality of interface interactions with an interface is configured. The interface automation script supports embedding Application Programming Interfaces (APIs) for real-time interaction and real-time processing video processing. One or more video production engine API controls are integrated into the interface automation script. Using the one or more API controls, one or more video elements are incorporated into the interface automation script. Based on the interface automation script, a real-time interaction and real-time video processing, post-processing with a video adapter is triggered. An output video is generated.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIGS. 1A - 1C are schematics associated with providing video production engine management using a video production engine, in accordance with aspects of the technology described herein;
FIG. 2A is a block diagram associated with providing video production engine management using a video production engine, in accordance with aspects of the technology described herein;
FIG. 2B is a flow diagram associated with providing video production engine management using a video production engine, in accordance with aspects of the technology described herein;
FIG. 3 provides a first exemplary method of providing video production engine management using a video production engine, in accordance with aspects of the technology described herein;
FIG. 4 provides a second exemplary method of providing video production engine management using a video production engine, in accordance with aspects of the technology described herein;
FIG. 5 provides a third exemplary method of providing video production engine management using a video production engine, in accordance with aspects of the technology described herein
FIG. 6 provides a block diagram of an exemplary item listing system computing environment suitable for use in implementing aspects of the technology described herein;
FIG. 7 provides a block diagram of an exemplary distributed computing environment suitable for use in implementing aspects of the technology described herein; and
FIG. 8 is a block diagram of an exemplary computing environment suitable for use in implementing aspects of the technology described herein.

### DETAILED DESCRIPTION

### OVERVIEW

Multimedia content generation technology involves a range of tools and systems designed to create, edit, and distribute digital media, such as videos, images, and audio. The components of this technology typically include video recording tools, editing software, dubbing and voiceover technologies, subtitle generators, and rendering systems. Video recording tools capture visual footage of the product, while editing software is used to cut, arrange, and enhance the footage, often incorporating effects, animations, and transitions. Dubbing technologies allow for the addition of voiceovers that explain or narrate product features, while automated subtitle generators create captions in multiple languages or formats to ensure accessibility. Once all these elements are integrated, rendering systems combine and finalize the media into a single cohesive product.

However, the technology currently relies on manual intervention for many of these steps, making the process time-consuming and repetitive, especially when frequent product updates or feature changes occur. Each time a modification is made to the product, all these steps-recording, editing, dubbing, subtitling, and rendering-may need to be repeated. This can quickly become inefficient, particularly for businesses with fast-evolving products, as they must ensure the accuracy and timeliness of their content, requiring constant re-production and updates of their multimedia assets.

Conventional item listing systems are not configured with a comprehensive computing logic and infrastructure when it comes to efficiently generating videos, particularly those designed to demonstrate product features, such as website functionalities. For example, if a user wants to create a tutorial showing how to add a product to a shopping cart on an e-commerce site, they must go through multiple sequential steps. This typically involves recording the screen while performing the task, editing the footage to highlight key actions, adding a voiceover to explain the process, incorporating subtitles for accessibility, and then merging all these elements into a final polished video. While this traditional workflow allows for effective demonstration, it is highly manual and time-intensive, requiring users to handle each component separately, which can significantly delay the production process.

Beyond the initial effort required to create the video, maintaining and updating it presents an even greater challenge. If any aspect of the website changes-such as the placement of an "Add to Cart" button or the introduction of a new checkout feature-the existing video quickly becomes obsolete. Since conventional video production tools do not allow for easy modification of specific elements without affecting the entire video, the entire recording and editing process must be repeated from scratch. This means re-recording the screen capture, manually editing the new footage, re-recording the voiceover, and reapplying subtitles-even for minor updates. This redundancy not only increases production costs but also makes it difficult to keep tutorial and product demonstration videos up to date, especially for digital platforms that frequently introduce UI changes or new features.

By way of example, an e-commerce company creates a tutorial video demonstrating how users can add a product to their shopping cart. The process involves recording screen interactions, adding a voiceover, and incorporating subtitles to enhance clarity. Once finalized, the video is published for customers to follow. However, shortly after, the website undergoes a minor UI update, moving the "Add to Cart" button to a new position. Even though the core functionality remains the same, the tutorial video becomes outdated because the visuals no longer match the updated interface. As a result, the e-commerce company must go through the entire video production process again-re-recording the screen interactions, re-editing the footage, re-syncing the voiceover, and reapplying subtitles-just to reflect this small change. As such, a more comprehensive video production engine - with an alternative basis for providing video production engine management functionality- can improve computing operations and interfaces for item listing systems.

### DESCRIPTION OF TECHNICAL SOLUTION

At a high level, a video production engine with interface automation functionality is designed to streamline the creation, editing, and updating of product demonstration videos. By integrating with interface automation scripts, it eliminates the need for manual screen recording, voiceover synchronization, and subtitle placement. Unlike traditional video production methods that require extensive post-processing, this solution embeds video production engine APIs directly into the automation workflow, enabling real-time content generation.

At its core, the video production engine operates through three interconnected components. A development toolkit provides Application Programming Interfaces that control key aspects of video creation, such as starting and stopping recordings, adding subtitles, and highlighting on-screen elements to draw user attention. A video elements generator dynamically produces subtitles, animations, and voiceovers, synchronizing them with interface interactions to ensure a seamless viewing experience. Finally, video processing adapters automate post-production tasks, merging video, subtitles, and audio into a polished final product without requiring manual intervention. In this way, the video production engine facilitates effortless video maintenance. When a website or product interface undergoes changes, the interface automation script can be updated to reflect those modifications and re-executed to generate an updated video output. This dramatically reduces production time, enhances scalability, and ensures that product demonstration videos remain accurate and up to date with minimal effort.

Operationally, the video production engine integrates seamlessly with interface automation tools to create, edit, and update product demonstration videos with minimal manual effort. The video production engine relies on an interface automation script that embeds video production APIs to enable real-time interaction and recording. By leveraging interface automation frameworks such as Selenium, Puppeteer, or Playwright, this interface automation script executes predefined user interactions on a website-such as clicking buttons, navigating pages, or filling out forms-while simultaneously triggering video recording, subtitle generation, and other multimedia enhancements. The input to an interface automation script is a scripted sequence of interface interactions, and the output is a raw recorded video containing all user actions performed in real time.

Complementing the interface automation script is the video elements generator, which dynamically creates subtitles, audio narrations, and screen highlights in sync with user actions. This ensures accurate timing and contextual relevance, enhancing the clarity and accessibility of the final video. The input to the video elements generator includes interface event data, prewritten subtitle text, or an AI-powered text-to-speech engine for generating narration. The output is a set of synchronized multimedia elements that align with the recorded user interactions, ensuring seamless integration with the video.

To further streamline production, the video production engine includes video processing adapters, which automate the merging and post-processing of video elements. The video processing adapters implement a Service Provider Interface (SPI) that standardizes video rendering, ensuring that recorded screen actions, subtitles, and audio narrations are combined into a cohesive final product. The input to this video processing adapter includes raw recorded footage, subtitles, and audio files, while the output is a fully processed, export-ready video in the desired format.

The video production engine supports an update mechanism, which enables efficient modifications to existing videos without requiring a complete re-recording. By simply adjusting the underlying interface automation script, users can update UI interactions, modify subtitles, or replace voiceovers, and the video production engine will automatically regenerate the video to reflect these changes. This eliminates the need for repetitive manual video production tasks, reducing both time and effort. The input to update mechanism is an updated interface automation script or modified video elements, and the output is an updated video that accurately reflects the latest product changes.

The video production engine's modular API and SPI design ensures cross-platform compatibility and extensibility, allowing it to integrate with a variety of interface automation frameworks and video processing tools. APIs such as startVideoRecording (), addSubtitles (), and screenHighlight () provide a flexible interface for developers to control video production within their automation scripts, while SPIs enable third-party tools to enhance post-processing capabilities. API calls can be made within the interface automation script to assist with a fully automated, programmable workflow for video creation.

The video production engine supports non-intrusive operation, which allows video production without modifying the underlying product application. Unlike traditional screen recording methods that require access to source code or manual UI modifications, the video production engine operates at the interface level, interacting with the web interface just as a human user would.

Finally, the video production engine incorporates dynamic post-processing, which provides context-aware, automated enhancements during video production. This includes intelligent subtitle placement, adaptive audio synchronization, and fine-tuned video transitions based on the recorded content. By analyzing the timing and content of user interactions, the post-processing engine optimizes the presentation of visual and audio elements, ensuring that the final video is polished and professional. The input for dynamic post-processing can include raw multimedia elements and metadata from the interface automation script, and the output is an enhanced video with smooth transitions, correctly timed subtitles, and synchronized voiceovers.

By integrating these components into a single cohesive system, this automated video production engine transforms the traditionally time-consuming and labor-intensive process of creating product demonstration videos into an efficient, scalable, and easily maintainable workflow.

By way of example, a software company developing an e-commerce platform wants to create a step-by-step product demonstration video showing users how to add an item to their shopping cart. Traditionally, they would need to manually record the screen, edit the footage, add subtitles, and sync a voiceover. However, with the video production engine, the software company can generate the video dynamically through an interface automation script integrated with video production APIs.

The interface automation script (e.g., a browser automation script) is written using Playwright and defines user interactions with the e-commerce website. It starts by launching a browser, navigating to the homepage, searching for a product, selecting an item, and clicking the "Add to Cart" button. The script also includes API calls such as startVideoRecording() at the beginning of the session, screenHighlight() to visually emphasize the "Add to Cart" button, and addSubtitles() to insert real-time captions like "Clicking the Add to Cart button to proceed with checkout." The input to browser automation script is the predefined user journey script, and the output is a recorded session that captures the sequence of interactions.

While the browser automation script is executing, the video elements generator dynamically produces subtitles based on browser events, ensuring they appear at the correct moments. Additionally, a text-to-speech (TTS) engine generates a synchronized voiceover, automatically narrating actions such as "Now, let's search for a wireless keyboard." The video production engine also detects key interactions, like clicking the "Add to Cart" button, and overlays an animation to highlight the action. The input to the video elements generator includes predefined subtitles and TTS text, and the output is a set of video elements aligned with user actions.

After the recording is complete, the video processing adapters take over, automatically merging the recorded footage, subtitles, and voiceover into a finalized product. A video processing adapter optimizes the video by ensuring smooth transitions between scenes, adjusting subtitle placement, and encoding the final output into a video format (e.g., MP4 format). The input to the video processing adaptive includes the recorded video, synchronized audio, and subtitles, while the output is a polished, ready-to-publish tutorial video.

A few weeks later, the company updates its website, slightly modifying the checkout process by introducing a "Buy Now" button next to the "Add to Cart" button. Instead of recreating the entire video, they use the update mechanism to modify the browser automation script to reflect the new UI. They adjust the script to highlight both buttons and modify the subtitles and narration accordingly. The video production engine automatically regenerates the video, ensuring it remains up to date without requiring manual re-recording. The input is the modified script and updated subtitle text, and the output is an updated video that seamlessly incorporates the UI changes.

Because the video production engine follows a modular API and SPI design, it easily integrates with other automation tools the company uses, such as AI-driven analytics that determine optimal subtitle timing based on user engagement data. The APIs allow developers to customize recordings with additional effects, while the SPIs ensure that third-party video processing tools can be used to refine the final output. API calls are embedded in the browser automation script to assist with the fully automated, customizable video production pipeline.

The non-intrusive operation of the video production engine means that it works purely through browser interactions without modifying the website's backend or source code. This ensures that product updates or new features can be demonstrated without requiring engineering teams to grant access to the core application.

Finally, dynamic post-processing enhances the video by intelligently positioning subtitles to avoid obstructing key UI elements and ensuring smooth voiceover transitions. By leveraging this automated video production engine, the company can quickly generate, update, and distribute high-quality product demonstration videos without the inefficiencies of traditional manual methods.

### EXAMPLE SYSTEM AND RESOURCES

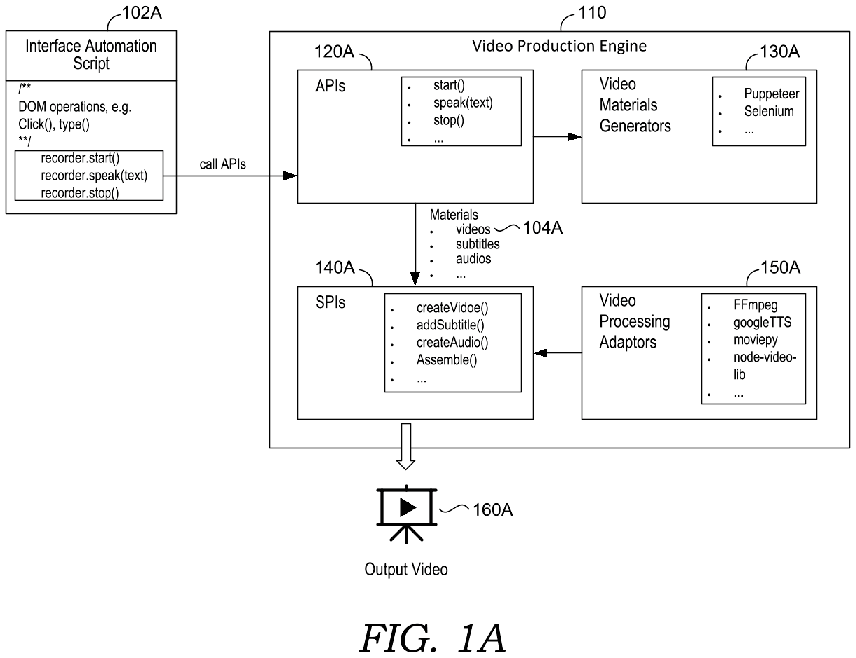

Aspects of the technical solution can be described by way of examples and with reference to FIGS. 1A - 1C. FIGS. 1A - 1C are schematic illustrations of different features and functionality associated with the video production engine to provide video production engine management in a digital platform.

With reference to FIG. 1A, FIG. 1A is a schematic of video production engine 110 including interface automation script 102A, video production materials 104A, API 120A, video elements generator 130A, SPIs 140A, video processing adaptor 150A, and output video 160A. The video production engine 110 is designed to automate the creation, editing, and processing of product demonstration videos. Video production engine 110 operates based on a structured flow that integrates interface automation scripts (e.g., interface automation script 102A) with a modular video generation framework, eliminating the need for manual screen recording, editing, and voiceover synchronization. By embedding video production functionalities directly within interface automation tools, the video production engine 110 streamlines the traditionally time-intensive process of creating instructional videos.

As shown, the interface automation script 102A executes user interactions with a web application, such as clicking buttons or filling out forms. The interface automation script 102A also interacts with the video production engine 110 by making API calls to initiate and control video recording, generate subtitles, and create voiceovers. The interface automation script 102A seamlessly feeds real-time data into the video production engine 110, ensuring that every recorded action is accurately captured and synchronized with relevant multimedia elements. Interface automation script 102A interacts with an interface (e.g., web browser) to perform DOM operations (e.g., click(), type()). The interface automation script 102A also contains API calls (recorder.start(), recorder.speak(text), recorder.stop()) that communicate with the video production engine. In this way, the interface automation scripts employed to capture and generate product demonstration videos in real-time.

Video production engine 110 is responsible for managing video creation, editing, and processing. Video production engine 110 includes multiple interacting engines, each handling a specific aspect of video production. APIs 120A serve as an interface between the interface automation script 102A and the video production engine 110. Example functions associated with the APIs include start(): Initiates video recording; speak(text): Generates voice narration from text; and stop(): Stops the recording session. APIs 120A allow direct control over video creation within the interface automation script 102A, eliminating the need for separate manual screen recordings.

Video materials generator 130A is responsible for generating raw video materials (e.g., video materials 104A) such as recorded screen interactions, subtitles, and audio narration. Video materials generator 130A integrates with interface automation tools like Puppeteer and Selenium, which simulate user interactions and provide content for video generation. Video materials generator 130A supports the ability to automatically generate subtitles and voiceovers in sync with script-driven user actions ensures an accurate and consistent video output.

The Service Provider Interface (SPI) 140A handles the assembly of video components. Example SPI 140A functions include: createVideo(): Generates the video file; addSubtitle(): Inserts subtitles at specified timestamps; createAudio(): Adds audio narration to the video; assemble(): Merges video, audio, and subtitles into a final product. By using a modular SPI approach, the video production engine 110 allows different providers to enhance video processing without altering the core video generation engine.

Video processing adaptor 150 is responsible for post-processing the generated video using third-party tools like: FFmpeg: For encoding and optimizing video format; Google Text-to-Speech (TTS): For voice narration; MoviePy, and Node-Video-Lib: For additional video editing and processing. Video processing adaptors 150 automate post-production tasks, such as optimizing subtitle placement and audio synchronization, reducing manual editing.

Output video 160A is processed video, containing recorded interactions, synchronized subtitles, and narration, is exported as the final product demonstration video. The video remains easy to update-when the UI changes, modifying the interface automation script regenerates a new version without requiring manual re-recording or re-editing.

In this way, the video production engine 110 provides automated video creation, where unlike traditional video production, which requires manual recording and editing, this video production engine 110 dynamically generates videos by integrating interface automation scripts with multimedia APIs. For example, when a product's UI changes, the interface automation scripts can be updated, and the video production engine 110 regenerates the video without manual intervention. The video production engine 110 also automates text-to-speech narration and subtitle placement, reducing effort while ensuring accurate synchronization. SPI architecture allows easy integration of third-party video tools, making the video production engine 110 adaptable to various production needs. Video production engine 110 transforms how instructional and demonstration videos are created, enabling scalability, efficiency, and real-time adaptability.

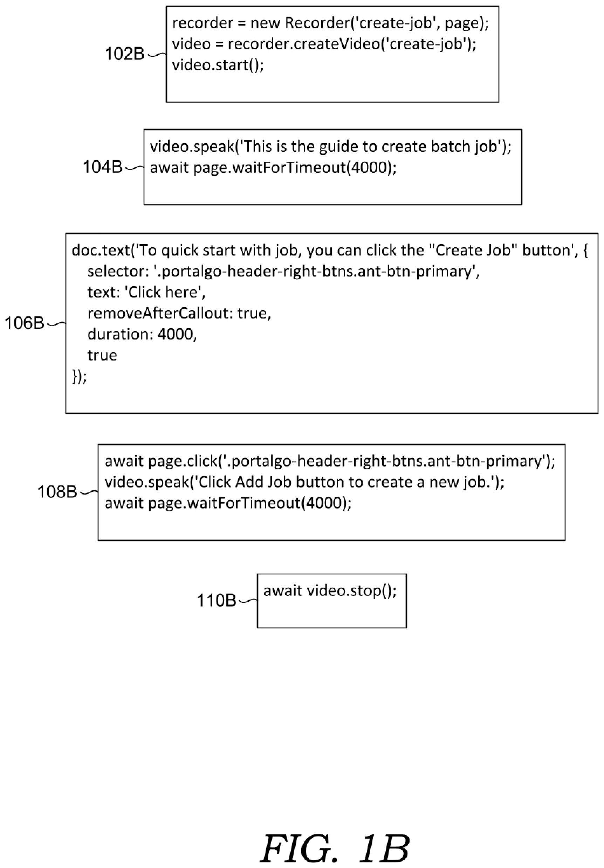

With reference to FIG. 1B, FIG. 1B illustrates example code browser automation script code associated with integration of video recording, narration, and instructional text overlays within a browser automation script, demonstrating how the video production engine dynamically generates instructional videos based on user interactions with a web application. This structured approach automates the entire video production process, eliminating the need for manual recording, voiceovers, and post-processing.

At the beginning of the process - automation script-driven recording 102B - the script initializes a recorder object and starts video recording. The recorder instance is created with the identifier "create-job", linking the recording process to a specific user task. The method recorder.createVideo('create-job') generates a new video file, and video.start() initiates the recording. This allows the video production engine to capture user interactions in real time, ensuring that every step of the workflow is documented. The integration of video recording within a script eliminates the need for external screen recording tools, automating the video capture process.

Next - automated narration using text-to-speech 104B - the script adds an automated voice narration using video.speak(). In this case, the command video.speak('This is the guide to create batch job'); generates a text-to-speech (TTS) voiceover that plays as the task begins. The await page.waitForTimeout(4000); ensures that the narration has enough time to complete before proceeding to the next action. This feature eliminates the need for separate voice recording sessions, making the video self-contained and synchronized with user actions.

To further enhance user understanding, the video production engine - automated text overlays for instructional purposes 106B - introduces dynamic instructional overlays. The command doc.text() injects an on-screen tooltip that informs users about the next action, stating, "To quick start with job, you can click the 'Create Job' button." The parameter selector: '.portalgo-header-right-btns.ant-btn-primary' ensures that the tooltip is positioned near the Create Job button. Additional options such as removeAfterCallout: true and duration: 4000 dictate that the tooltip remains visible for 4 seconds before disappearing, providing clear and time-sensitive guidance without cluttering the screen.

Next - automated UI interaction recording 108B - the script captures user interactions with UI elements, such as clicking buttons. The command await page.click('.portalgo-header-right-btns.ant-btn-primary'); simulates a user clicking the Add Job button, while video.speak('Click Add Job button to create a new job.') provides instant narration to explain the action. The video production engine waits (await page.waitForTimeout(4000);) to allow the user to process the step before moving forward. This synchronization of narration, user actions, and on-screen tooltips ensures that the video is both instructive and easy to follow.

Finally - dynamic post-processing and video assembly 110B - the script stops the video recording using await video.stop(). This ensures that the generated instructional video includes only the necessary content, reducing the need for manual editing or trimming. By embedding video controls directly within the browser automation script, the video production engine automates the entire video creation process, making it scalable, efficient, and highly adaptable.

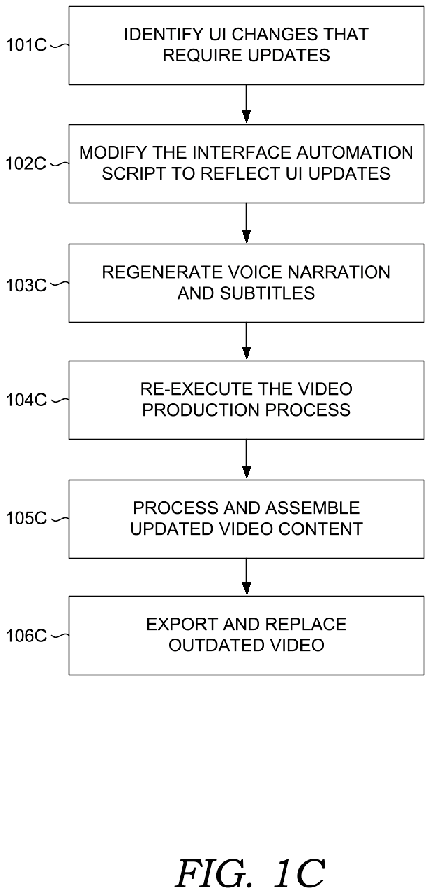

With reference to FIG. 1C, FIG. 1C is a flow diagram associated with an update mechanism of a video production engine, the update mechanism ensures that instructional videos remain accurate and up to date by dynamically regenerating content when a product's UI or workflow changes. Instead of requiring manual re-recording or post-production editing, the video production engine automatically reflects modifications by updating the browser automation script and rerunning the video production workflow. This eliminates redundant work and ensures that the latest version of the software is always reflected in the generated videos.

### Step 101C: Identify UI Changes that Require Updates

The process begins by identifying the specific UI changes that need to be updated in the video. This could be a modification to an interface element, such as a button being repositioned, renamed, or redesigned, or a change in workflow, such as the addition of a new form field or step in the process. A developer or automation engineer reviews these changes and determines the corresponding updates required in the interface automation script. By modifying the interface automation script rather than re-recording the video manually, the video production engine leverages automation to streamline the content update process.

### Step 102C: Modify the Interface Automation Script to Reflect UI Updates

Once the necessary changes have been identified, the interface automation script is modified to reflect the new UI layout or updated workflow. This may involve adjusting selectors to target newly positioned elements, updating navigation steps, or incorporating new interactions. For example, if a "Submit" button has been moved, the script is updated to click its new location, ensuring that the automation accurately captures user interactions in the updated interface. Additionally, if a new step has been added to the workflow, such as a confirmation dialog requiring user acknowledgment, the interface automation script is modified to include that interaction.

### Step 103C: Regenerate Voice Narration and Subtitles

With the script updated, the video production engine automatically regenerates voice narration and subtitles to match the revised content. The text-to-speech (TTS) engine dynamically updates spoken instructions using video. speak (), ensuring that the narration corresponds to the updated UI elements and actions. If an instructional overlay was previously associated with a now-modified UI element, the interface automation script updates the doc.text() function to reflect the new button label or interaction. This prevents outdated instructions from appearing in the final video and maintains consistency between on-screen actions and guidance.

### Step 104C: Re-Execute the Video Production Process

Once the script modifications are complete, the video production process is re-executed, with the video production engine capturing the updated interactions, narration, and annotations in real-time. The updated script triggers a new recording session using recorder. start ( ), capturing the revised user journey without requiring a human operator. Because the video production engine dynamically processes elements in sync with script execution, the updated video is automatically synchronized with the new UI layout and workflow.

### Step 105C: Process and Assemble Updated Video Content

After recording, the video processing engine assembles the updated content, merging the new footage with revised subtitles, highlights, and narration. The post-processing adapters handle optimization tasks such as encoding the video, adjusting subtitle timing, and ensuring seamless transitions between updated and existing content. By automating this process, the video production engine removes the need for manual video editing, ensuring a fully processed and ready-to-use video with minimal effort.

### Step 106C: Export and Replace Outdated Video

Finally, the newly updated video is exported and replaces the outdated version. The interface automation script remains stored for future modifications, allowing the process to be repeated as needed whenever new UI updates occur. This approach ensures that instructional videos stay current with minimal human intervention, making the update mechanism a powerful tool for maintaining accurate training materials and product documentation over time.

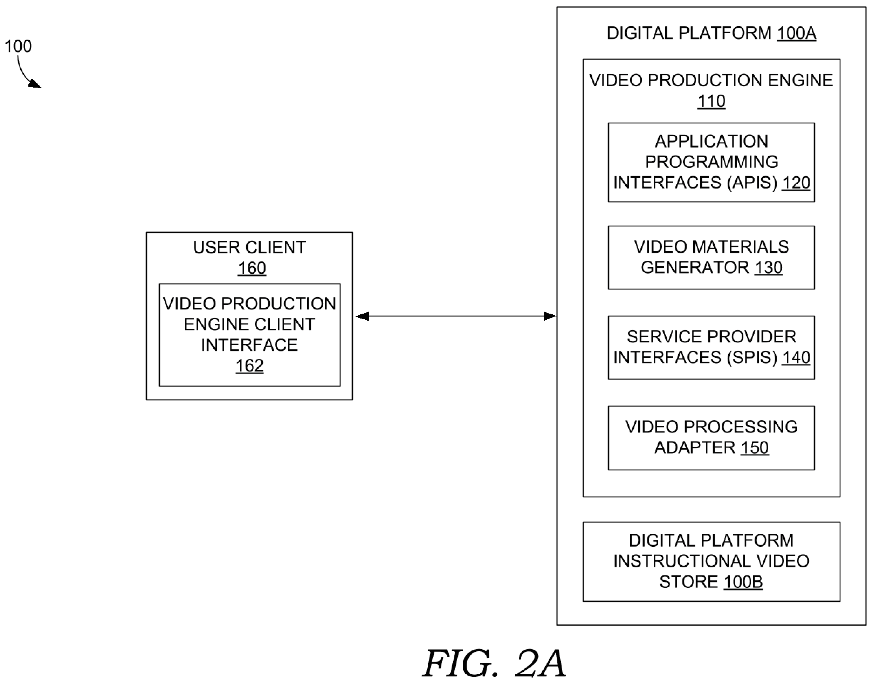

With reference to FIG. 2A, FIG. 2A a cloud computing system 100, digital platform 100A (e.g., item listing system), digital platform instructional videos 100B, video production engine 110, Application Programming Interfaces (APIs) 120, video materials generators 130, Service Provide Interfaces (SPIs) 140, video processing adapters 150, user client 160, and video production engine client interface 162.

The cloud computing system 100 serves as the foundational infrastructure that offers scalable and flexible resources to host and manage video production engine components. Video production engine 110 is provided within digital platform 100A to automate the creation of instructional videos. Video production engine 110 enables a user client 160 to interact with the video production engine 110 through a dedicated client interface - video production engine client interface 162, eliminating the need for manual video recording, editing, and post-processing. Video production engine 110 streamlines the entire video generation pipeline by leveraging interface automation scripts, real-time API-driven interactions, and automated video processing tools to produce high-quality, updatable instructional content.

User client 160 initiates interactions with the video production engine 110 via the video production engine client interface 162, which provides access to the video production engine 110 automated functionalities. Through video production engine client interface 162, users can configure interface automation scripts that capture interactions with a web-based digital platform-for instance, an item listing system, a product demo environment, or a software training interface. These scripts allow for real-time interaction tracking, dynamically generating video elements such as narration, subtitles, screen transitions, and highlights based on user-defined automation rules.

The video production engine 110 orchestrates the entire video creation workflow. Video production engine 110 includes several key components that ensure efficient processing and seamless integration with interface automation tools. The Application Programming Interfaces (APIs) 120 provides a mechanism for embedding video production controls directly into the automation script, allowing users to start and stop recordings, generate subtitles, overlay instructional elements, and control video playback within the interface environment. These API-driven interactions enable real-time video generation without requiring traditional screen recording software or manual synchronization of multimedia elements.

The video materials generator 130 dynamically constructs video components based on the recorded interactions, ensuring that narration, subtitles, and visual effects are synchronized with user actions. Video materials generator 130 supports automated subtitle generation from predefined scripts, text-to-speech (TTS) audio generation, and seamless integration of UI-based screen transitions. By processing video elements in real time, video materials generator 130 eliminates the need for post-production editing, allowing for rapid content deployment.

To enhance modularity and compatibility with external systems, the service provider interface (SPI) 140 serves as an integration layer that connects third-party tools and processing libraries to the video production engine. SPIs 140 ensure that various video formats, processing standards, and output configurations are supported, enabling the system to adapt to different deployment environments. The SPIs 140 also facilitate customization and extensibility, allowing organizations to integrate proprietary editing workflows or AI-driven content enhancements into the video production pipeline.

Once video elements are generated and synchronized, the video processing adapter 150 manages post-processing tasks, optimizing the final output through video encoding, subtitle timing adjustments, and content formatting. Video processing adapter 150 utilize FFmpeg, MoviePy, and similar tools to ensure that the output videos are professionally formatted and compressed for efficient storage and playback. The automation of post-processing further reduces manual effort, allowing for consistent high-quality instructional videos to be produced at scale.

The final output, stored within the digital platform instructional video store 100B that includes fully processed videos that are ready for distribution, playback, or further integration with learning management systems. Video production engine 110 supports an update mechanism ensures that when changes occur within the interface automation script, an updated video is automatically generated-without requiring a complete re-recording of content. This capability makes the system highly efficient for maintaining up-to-date training materials, software demos, and product walkthroughs.

By operating non-intrusively, the video production engine 110 does not modify the underlying digital platform but instead captures and processes interactions in real time. This ensures that content updates, UI changes, and workflow modifications are seamlessly incorporated into new versions of instructional videos without disrupting existing platform functionality. The video production engine 110 also provides context-aware subtitle placement and timing adjustments, ensuring that instructional text overlays do not obscure critical UI elements, thus improving the clarity and effectiveness of the generated content.

Video production engine 110 transforms traditional video creation by embedding automation, real-time interaction processing, and adaptive content generation into a single streamlined workflow. The result is a scalable, flexible, and easily maintainable video production framework that significantly reduces the time and effort required to create high-quality instructional videos while ensuring they remain current and aligned with evolving user interfaces and workflows.

For clarity and efficient reference, a glossary of key terms and concepts pertinent to the technical solution is provided below.

Interface Automation Script - A script (e.g., a browser automation script) that automates interactions with an interface (e.g., web browser), such as clicking buttons, filling forms, and navigating pages. It supports embedding APIs for real-time interaction and real-time video processing within the automation workflow.

Video Production Engine - A system that automates video creation, including recording, editing, dubbing, subtitling, and post-processing. It is integrated with interface automation scripts and a development toolkit to streamline video production.

Application Programming Interfaces (APIs) for Real-Time Video Processing - APIs embedded in the interface automation script that control video-related functions.

Example Functions include:
Initiating video recording within the interface.

Inserting subtitles at a specific timestamp.

Pausing/resuming recording for key transitions.

Highlighting content on the interface.

Stopping and saving the video file.

Video Elements Generator - Dynamically generates video elements such as:
Screen transitions that seamlessly integrate page navigation or UI changes.

Subtitles from predefined script instructions.

Audio generation using a text-to-speech engine or pre-recorded voiceovers, synchronized with interface interactions.

Video Processing Adapter - Supports video post-processing tasks via a Service Provider Interface (SPI). Handles merging video, subtitles, and audio, as well as optimizing video formatting.

Script-Based Update Mechanism - Allows modifying an existing interface automation script to generate an updated output video. Ensures that changes in UI elements or workflows are automatically reflected in newly generated videos without requiring re-recording.

Precise Synchronization of Subtitles and Dubbing - Ensures subtitles and audio are inserted at exact designated points in the video. Maintains perfect alignment with interface interactions for real-time accuracy.

Non-Intrusive Operation - The video production engine works without altering the underlying interface application. Preserves the integrity of the application while enabling dynamic content updates.

Context-Aware Subtitle Adjustment - Dynamically adjusts subtitle placement and timing based on contextual analysis of video content. Ensures subtitles do not obscure important UI elements and remain easy to read.

Real-Time Interaction and Post-Processing - The interface automation script communicates with the video production engine, sending input commands related to interactions. Based on the input, the system triggers post-processing via the video processing adapter to generate a polished output video.

Receiving and Displaying Updated Output Video - The updated output video is generated from real-time interactions and post-processing. The system automatically regenerates the video based on script changes and displays the updated version.

Development Toolkit Integration - The video production engine is integrated with a development toolkit, allowing developers to embed video-related functionalities within interface automation scripts. Ensures seamless compatibility with interface automation frameworks like Selenium, Puppeteer, and Playwright.

Automated Workflow Execution - The system automates the entire video production workflow, including, for example:
Capturing interface interactions.

Generating subtitles and narration.

Post-processing and exporting the final video.

Removes the need for manual screen recording or video editing, making the process more efficient.

Triggering Video Generation Based on Interface Interactions - The interface automation script serves as the trigger point for video recording and content generation. API functions embedded within the script determine when and how recording starts, subtitles are inserted, and narration is generated.

Automated Scene Transitions - The system automatically detects changes in interface interactions, such as page transitions or UI updates, and smoothly integrates them into the video. Enhances the user experience by making tutorials and demos easier to follow.

Cloud-Based or Local Processing - The video processing engine can be implemented locally or as a cloud-based service, allowing for scalable deployment. Organizations can generate and update videos on-demand without requiring powerful local computing resources.

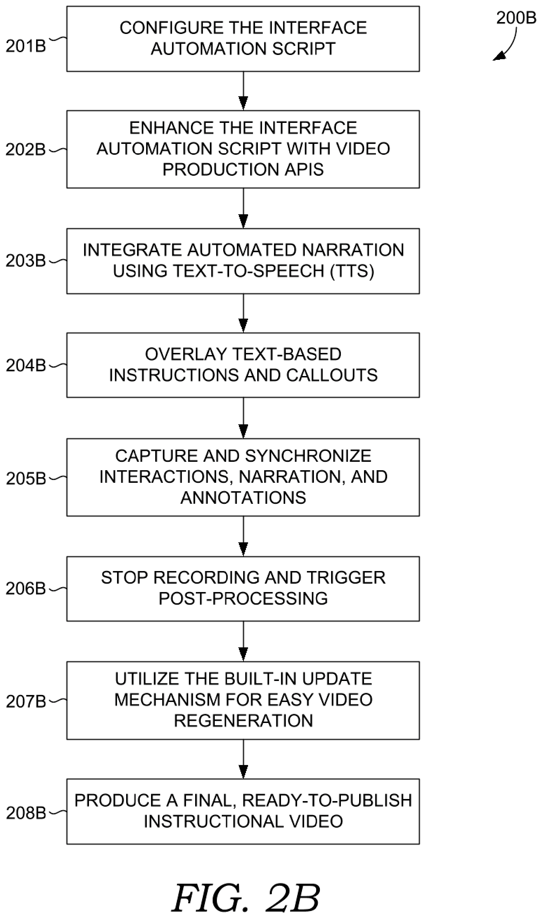

Customizable API-Based Extensions - The API architecture allows developers to extend functionalities, such as:
With reference to FIG. 2B, FIG. 2B, illustrates a schematic 200B associated with providing a video production engine in accordance with embodiments described herein. The technical solution of the video production engine can be explained by way of steps.

### Step 201B: Configure the Interface Automation Script.

The process begins by configuring the interface automation script, which serves as the foundation for the video generation workflow. This interface automation script is responsible for simulating user interactions within a web application, such as navigating to a specific page, clicking buttons, entering text into forms, and waiting for responses. It interacts with an interface automation framework like Puppeteer, Playwright, or Selenium, ensuring that each step is executed in a controlled and repeatable manner. By defining these user interactions as scripted automation tasks, the video production engine eliminates the need for manually recording user actions, making the process scalable and easily modifiable.

### Step 202B: Enhance the Interface Automation Script with Video Production APIs

Once the browser automation script is in place, it is enhanced with video production engine APIs to enable real-time recording of user interactions. A recorder instance is initialized, creating a new video file that corresponds to the recorded session. The interface automation script starts the recording at the beginning of the workflow, ensuring that every action taken within the web application is captured. This approach eliminates the need for external screen recording tools by embedding the video creation process directly into the automation script. By programmatically controlling when the recording starts and stops, the video production engine ensures that only relevant interactions are included, reducing unnecessary content and optimizing the final video.

### Step 203B: Integrate Automated Narration using Text-to-Speech (TTS)

To enhance the instructional quality of the generated video, the script includes automated narration using text-to-speech (TTS). At key points during the workflow, the video.speak() function is invoked, generating real-time voice narration that describes the action being performed. For example, when a user clicks the "Create Job" button, the interface automation script triggers an audio explanation such as "Clicking the Create Job button to initiate a new task." This removes the need for manually recorded voiceovers, making the video self-contained and automatically synchronized with the user interactions. Additionally, the timing of the narration is controlled using wait commands, ensuring that the spoken instructions align perfectly with the corresponding UI events.

### Step 204B: Overlay Text-based Instructions and Callouts

To further guide users visually, the video production engine dynamically overlays text-based instructions and callouts within the video. The doc.text() function allows the interface automation script to generate temporary instructional tooltips that appear near relevant UI elements. For instance, when a user needs to click a button, the video production engine places a tooltip with the message "Click here to proceed," positioned directly above the button. These overlays automatically disappear after a predefined duration, ensuring that the video remains visually uncluttered while still providing useful guidance. By automating these text overlays, the video production engine eliminates the need for manual post-production annotation, significantly reducing editing time.

### Step 205B: Capture and Synchronize Interactions, Narration, and Annotations

As the user progresses through the scripted workflow, the video production engine continues to capture and synchronize interactions, narration, and annotations in real-time. As each scripted action-such as clicking a button or navigating to a new page-occurs, the video production engine records the event while simultaneously generating corresponding voice narration through text-to-speech and overlaying instructional text or visual highlights. These elements are aligned with precise timestamps, ensuring that the final video accurately reflects the timing and context of each user action. This real-time synchronization eliminates the need for manual editing and ensures a cohesive, polished instructional video that mirrors the exact flow of the automation script.

### Step 206B: Stop Recording and Trigger Post-Processing

When the workflow reaches its conclusion, the interface automation script stops the recording using video.stop(), signaling the end of the session. At this point, the video processing engine takes over, performing automated post-processing tasks such as merging video with subtitles, adjusting audio synchronization, and optimizing the output format. The video production engine integrates with external video processing tools like FFmpeg and MoviePy, ensuring that the final video meets professional-quality standards. The result is a fully processed, ready-to-publish instructional video that requires no additional manual editing.

### Step 207B: Utilize the Built-in Update Mechanism for Easy Video Regeneration.

Advantageously, the video production engine includes a built-in update mechanism, which allows videos to be regenerated dynamically whenever the UI of the application changes. Instead of manually re-recording videos to reflect interface updates, the interface automation script can be modified to accommodate new workflows, and the video production engine will automatically regenerate an updated version of the video. This makes the solution particularly useful for training materials, product tutorials, and customer support videos, where frequent updates are required.

### Step 208B: Produce a Final, Ready-to-Publish Instructional Video

By integrating interface automation, video production APIs, automated narration, instructional overlays, and dynamic post-processing, this system transforms how instructional and demonstration videos are created. The process is fully automated, highly scalable, and adaptable, making it an ideal solution for organizations seeking to streamline video production while maintaining high-quality and up-to-date content.

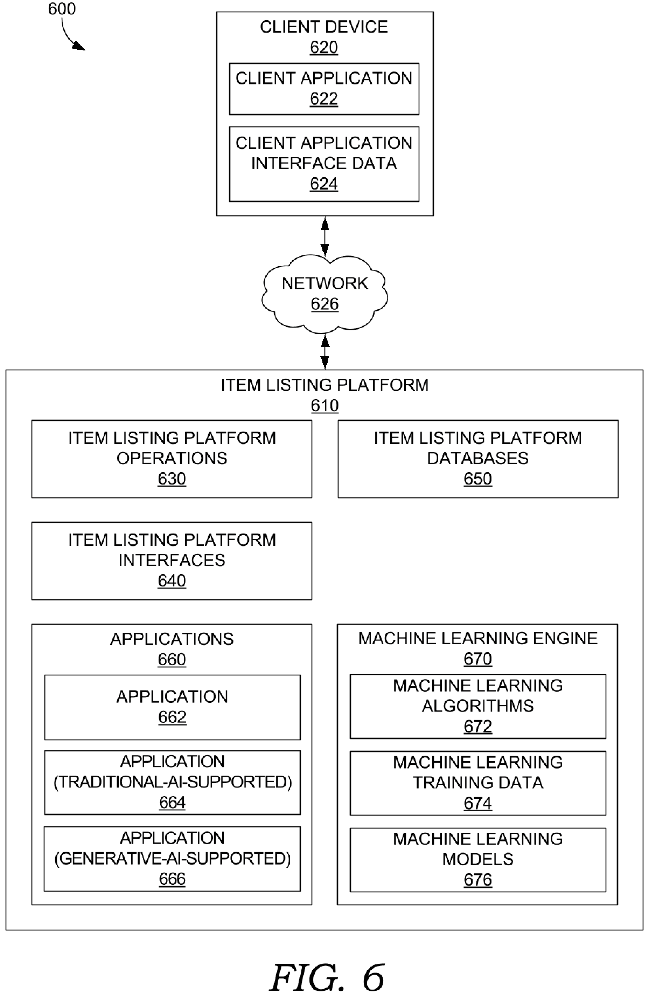

Aspects of the technical solution can be described by way of examples and with reference to FIGS. 1A - 1C, 2A, and 2B. FIG. 2A is a block diagram of an exemplary technical solution environment, based on example environments described with reference to FIGS. 6, 7, and 8 for use in implementing embodiments of the technical solution are shown. Generally the technical solution environment includes a technical solution system suitable for providing the example item listing system 600 in which methods of the present disclosure may be employed. In particular, FIG 2A shows a high-level architecture of the cloud computing system 100 in accordance with implementations of the present disclosure. Among other engines, managers, generators, selectors, or components not shown (collectively referred to herein as "components"), the cloud computing system 100 of FIG. 2A support functionality described in FIGS. 1A - 1F.

### Example Methods

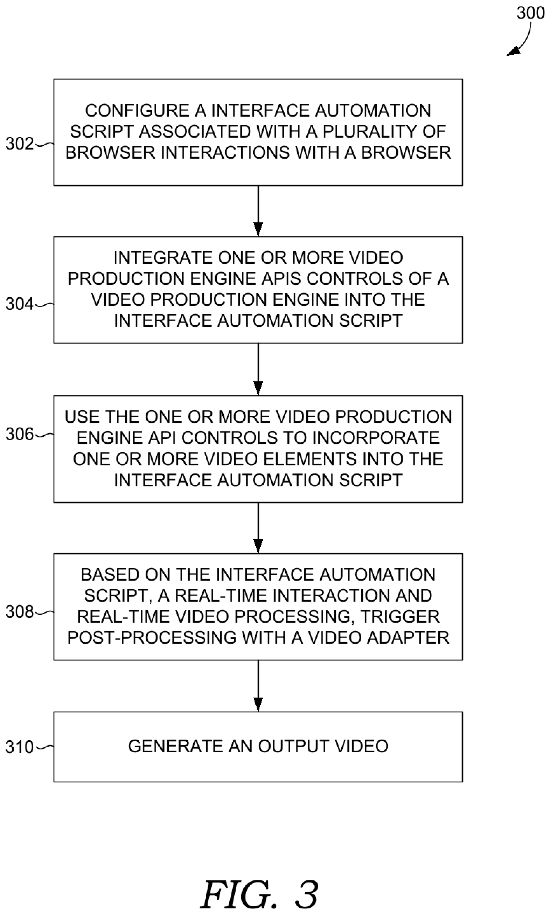

With reference to FIGS. 3, 4, and 5 flow diagrams that illustrate methods for providing a video production engine in an item listing system. The methods may be performed using the item listing system described herein. In embodiments, one or more computer-storage media having computer-executable or computer-useable instructions embodied thereon that, when executed, by one or more processors can cause the one or more processors to perform the methods (e.g., computer-implemented method) in an item listing system (e.g., computerized system or computer system).

Turning to FIG. 3, a flow diagram is provided that illustrates a method 300 for providing a video production engine in an item listing system. At block 302, configure an interface automation script associated with a plurality of interface interactions with an interface, wherein the interface automation script supports embedding Application Programming Interfaces (APIs) for real-time interaction and real-time video processing. At block 304, integrate one or more video production engine API controls of a video production engine into the interface automation script. At block 306, using the one or more video production engine API controls, incorporate one or more video elements into the interface automation script. At block 308, based on the interface automation script, real-time interaction, and real-time video processing, trigger post-processing with a video processing adapter. At block 310, based on post-processing, generate an output video.

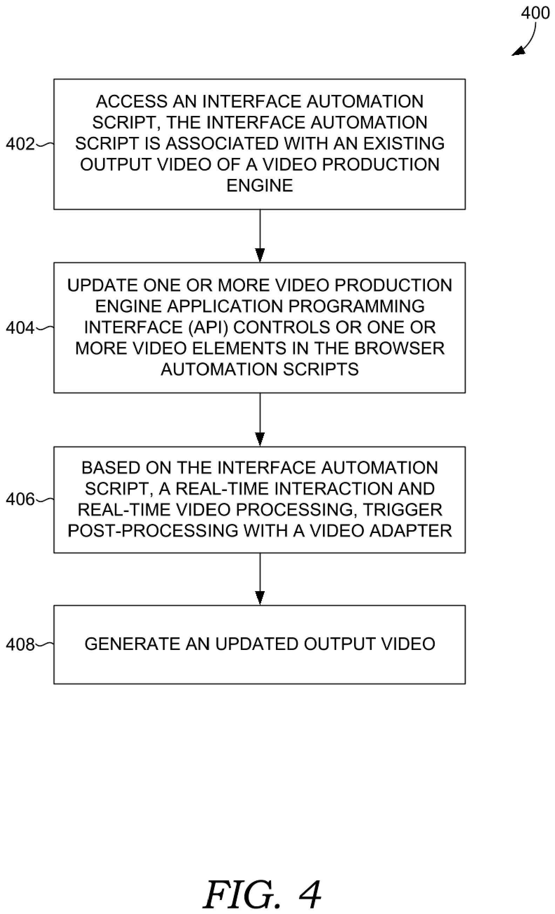

Turning to FIG. 4, a flow diagram is provided that illustrates a method 400 for providing a video production engine in an item listing system. At block 402, access an interface automation script, wherein the interface automation script is associated with an existing output video of a video production engine, and supports embedding Application Programming Interfaces (APIs) for real-time interaction and real-time video processing. At block 404, update one or more video production engine API controls or one or more video elements in the interface automation script. At block 406, based on the interface automation script, real-time interaction, and real-time video processing, trigger post-processing with a video processing adapter. At block 408, based on post-processing, generate an updated output video.

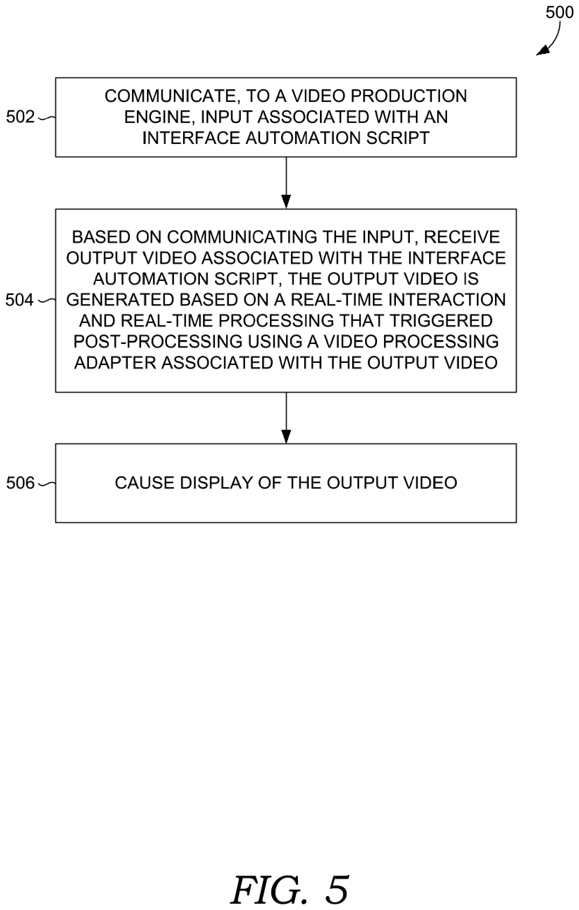

Turning to FIG. 5, a flow diagram is provided that illustrates a method 500 for providing a video production engine in an item listing system. At block 502, communicate, to a video production engine, input associated with an interface automation script, wherein the interface automation script is associated with a plurality of interface interactions with an interface and supports embedding Application Programming Interfaces (APIs) for real-time interaction and real-time video processing. At block 504, based on communicating the input, receive output video associated with the interface automation script, wherein the output video is generated based on real-time interaction and real-time video processing that triggered post-processing using a video processing adapter associated with the output video. At block 506, cause display of the output video.

### Technical Improvement

Embodiments of the present invention have been described with reference to several inventive features (e.g., operations, systems, engines, and components) associated with an item listing system. Inventive features described include operations, interfaces, data structures, and arrangements of computing resources associated with providing the functionality described herein relative with reference to a video production engine associated with an item listing system.

Embodiments of the present invention relate to the field of computing, and more particularly to an item listing system. The following described exemplary embodiments provide a system, method, and program product to, among other things, execute operations that provide a video production engine. Therefore, the present embodiments improve the technical field of item listing technology enhancing the efficiency and effectiveness of video production.

The technical solution enables integrating real-time interaction and real-time video processing directly into an interface automation script through embedded Application Programming Interfaces (APIs). Traditionally, video production requires manual recording, post-processing, and synchronization of multimedia elements, which is time-consuming and inefficient. The video production engine approach eliminates these challenges by allowing an interface automation script to dynamically control video creation, ensuring real-time capture, processing, and content generation. By embedding video production engine API controls within the automation script, the system can start and stop recordings, generate subtitles, insert narration, and highlight key UI elements without manual intervention. This enables seamless synchronization between user interactions and video elements, ensuring that all recorded content is contextually accurate and automatically processed as the script executes.

The incorporation of real-time video processing and automated post-processing via a video processing adapter further enhances efficiency, as videos are finalized immediately after execution, eliminating traditional manual editing steps. This capability makes video production scalable, easily updatable, and adaptable to changes in UI workflows, making it ideal for software training, product demos, and automated instructional content generation. This level of automation and adaptability is what sets this approach apart as a truly innovative solution.

Advantageously, the technical solution introduces improvements over conventional video production tools. In particular, the video production engine's support for embedding real-time video production within an interface automation script, allowing seamless recording, processing, and synchronization of video elements without manual intervention, introduces technical improvements. By integrating APIs for real-time interaction and real-time video processing, the video production engine automates subtitles, narration, screen highlights, and UI transitions, ensuring immediate and accurate content generation. The video processing adapter further streamlines post-processing, eliminating the need for separate editing. This innovation enables scalable, dynamic, and easily updatable instructional videos, reducing production time while maintaining synchronization with evolving UI workflows.

Functionality of the embodiments of the present invention have further been described, by way of an implementation and anecdotal examples - to demonstrate that the operations for providing dynamic item listing using a video production engine in an item listing system as a solution to a specific problem in item listing technology to improve computing operations in item listing systems. Overall, these improvements result in less CPU computation, smaller memory requirements, and increased flexibility in item listing systems when compared to previous conventional item listing systems operations performed for similar functionality.

### ADDITIONAL SUPPORT FOR DETAILED DESCRIPTION OF THE INVENTION

### Example Item Listing System Environment

Referring now to FIG. 6, FIG. 6 illustrates an example item listing system 600 computing environment in which implementations of the present disclosure may be employed. In particular, FIG. 6 shows a high-level architecture of an example item listing platform 610 that can host a technical solution environment, or a portion thereof. It should be understood that this and other arrangements described herein are set forth as examples. For example, as described above, many elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The item listing system 600 can be a cloud computing environment that provides computing resources for functionality associated with the item listing platform 610. For example, the item listing system 600 supports delivery of computing components and services - including servers, storage, databases, networking, applications, and machine learning associated with the item listing platform 610 and client device 620. A plurality of client devices (e.g., client device 620) include hardware or software that access resources on the item listing system 600. Client device 620 can include an application (e.g., client application 622) and interface data (e.g., client application interface data 624) that support client-side functionality associated with the item listing system. The plurality of client devices can access computing components of the item listing system 600 via a network (e.g., network 626) to perform computing operations.

The item listing platform 610 is responsible for providing a computing environment or architecture that includes the infrastructure that supports providing item listing platform functionality (e.g., e-commerce functionality). The item listing platform supports storing items in item databases and providing a search system for receiving queries and identifying search results based on the queries. The item listing platform may also provide a computing environment with features for managing, selling, buying, and recommending different types of items. Item listing platform 610 can specifically be for a content platform such as EBAY content platform or e-commerce platform, developed by EBAY INC., of San Jose, California.

The item listing platform 610 can provide item listing operations 630 and item listing interfaces 640. The item listing operations 630 can include service operations, communication operations, resource management operations, security operations, and fault tolerance operations that support specific tasks or functions in the item listing platform 610. The item listing interfaces 640 can include service interfaces, communication interfaces, resource interfaces, security interfaces, and management and monitoring interfaces that support functionality between the item listing platform components. The item listing operations 630 and item listing interfaces 640 can enable communication, coordination and seamless functioning of the item listing system 600.

By way of example, functionality associated with item listing platform 610 can include shopping operations (e.g., product search and browsing, product selection and shopping cart, checkout and payment, and order tracking); user account operations (e.g., user registration and authentication, and user profiles); seller and product management operations (e.g., seller registration and product listing and inventory management); payment and financial operations (e.g., payment processing, refunds and returns); order fulfillment operations (e.g., order processing and fulfillment and inventory management); customer support and communication interfaces (e.g., customer support chat/email and notifications); security and privacy interfaces (e.g., authentication and authorization, payment security); recommendation and personalization interfaces (e.g., product recommendations and customer reviews and ratings); analytics and report interfaces (e.g., sales and inventory reports, and user behavior analytics); and APIs and Integration Interfaces (e.g., APIs for Third-Party Integration).

The item listing platform 610 can provide item listing platform databases (e.g., item listing platform databases 650) to manage and store different types of data efficiently. The item listing platform databases 650 can include relational databases, NoSQL databases, search databases, cache databases, content management systems, analytics databases, payment gateway database, customer relationship management databases, log and error databases, inventory and supply chain databases, and multi-channel databases that are used in combination to efficiently manage data and provide e-commerce experience for users.

The item listing platform 610 supports applications (e.g., applications 660) that is a computer program or software component or service that serves a specific function or set of functions to fulfil a particular item listing platform requirement or user requirement. Applications can be client-side (user-facing) and server-side (backend). Applications can also include application without any AI support (e.g., application 662) application supported by traditional AI model (e.g., application 664), and applications supported by generative AI models (e.g., application 666). By way of example, applications can include an online storefront application, mobile shopping app, admin and management console, payment gateway integration, user account and authentication application, search and recommendation engines, inventory and stock management application, order processing and fulfillment application, customer support and communication tools, content management system, analytics and report applications, marketing and promotion applications, multi-channel integration applications, log and error tracking applications, customer relationship management (CRM) applications, security applications, and APIs and web services that are used in combination to efficiently deliver e-commerce experiences for users.

The items listing platform 610 can include a machine learning engine (e.g., machine learning engine 670). The machine learning engine 670 refers to machine learning framework or machine learning platform that provides the infrastructure and tools to design, train, evaluate, and deploy machine learning models. The machine learning engine 670 can serve as the backbone for developing and deploying machine learning applications and solutions. Machine learning engine 670 can also provide tools for visualizing data and model results, as well as interpreting model decisions to gain insights into how the model is making predictions.

The machine learning engine 670 can provide the necessary libraries, algorithms, and utilities to perform various tasks within the machine learning workflow. The machine learning workflow can include data processing, model selection, model training, model evaluation, hyperparameter tuning, scalability, model deployment, inference, integration, customization, data visualization. Machine learning engine 670 can include pre-trained models for various tasks, simplifying the development process. In this way, the machine learning engine 670 can streamline the entire machine learning process, from data preparation and model training to deployment and inference, making it accessible and efficient for different types of users (e.g., customers, data scientists, machine learning engineers, and developers) working on a wide range of machine learning applications.

Machine learning engine 670 can be implemented in the item listing system 600 as a component that leverages machine learning algorithms and techniques (e.g., machine learning algorithms 672) to enhance various aspects of the video production engine's functionality. Machine learning engine 670 can provide a selection of machine learning algorithms and techniques used to teach computers to learn from data and make predictions or decisions without being explicitly programmed. These techniques are widely used in various applications across different industries, and can include the following examples: supervised learning (e.g., linear regression: classification, support vector machines (SVM); unsupervised learning (e.g., clustering, principal component analysis (PCA), association rules (e.g., apriori); reinforcement learning (e.g., Q-Learning, deep Q-Network (DQN); and deep learning (e.g., neural networks, convolutional neural networks (CNN), and recurrent neural networks (RNN); and ensemble learning random forest.

Machine learning training data 674 supports the process of building, training, and fine-tuning machine learning models. Machine learning training data 674 consists of a labeled dataset that is used to teach a machine learning model to recognize patterns, make predictions, or perform specific tasks. Training data typically comprises two main components: input feature (X) and labels or target values (Y). Input features can include variables, attributes, or characteristics used as input to the machine learning model. Input features (X) can be numeric, categorical, or even textual, depending on the nature of the problem. For example, in a model for predicting house prices, input features might include the number of bedrooms, square footage, neighborhood, and so on. Labels or target values (Y) include the values that the model aims to predict or classify. Labels represent the desired output or the ground truth for each corresponding set of input features. For instance, in a spam email classifier, the labels would indicate whether each email is spam or not (i.e., binary classification). The training process involves presenting the model with the training data, and the model learns to make predictions or decisions by identifying patterns and relationships between the input features (X) and the target values (Y). A machine learning algorithm adjusts its internal parameters during training in order to minimize the difference between its predictions and the actual labels in the training data. Machine learning engine 670 can use historical and real-time data to train models and make predictions, continually improving performance and user experience.

Machine learning engine 670 can include machine learning models (e.g., machine learning models 676) generated using the machine learning engine workflow. Machine learning models 676 can include generative AI models and traditional AI models that can both be employed in the item listing system 600. Generative AI models are designed to generate new data, often in the form of text, images, or other media, based on patterns and knowledge learned from existing data. Generative AI models can be employed in various ways including content generation, product image generation, personalized product recommendations, natural language chatbots, and content summarization. Traditional AI models encompass a wide range of algorithms and techniques and can be employed in various ways including recommendation systems, predictive analytics, search algorithms, fraud detection, customer segmentation, image classification, Natural Language Processing (NLP) and A/B testing and optimization. In many cases, a combination of both generative and traditional AI models can be employed to provide a well-rounded and effective e-commerce experience, combining data-driven insights and creativity.

Machine learning engine 670 can be used to analyze data, make predictions, and automate processes to provide a more personalized and efficient shopping experience for users. By way of example, product recommendations search and filtering: pricing optimization, inventory and stock management: customer segmentation, churn prediction and retention, fraud detection, sentiment analysis, customer support and chatbots, image and video analysis, and ad targeting and marketing. The specific applications of machine learning within the item listing platform 610 can vary depending on the specific goals, available data, and resources.

### Example Distributed Computing System Environment

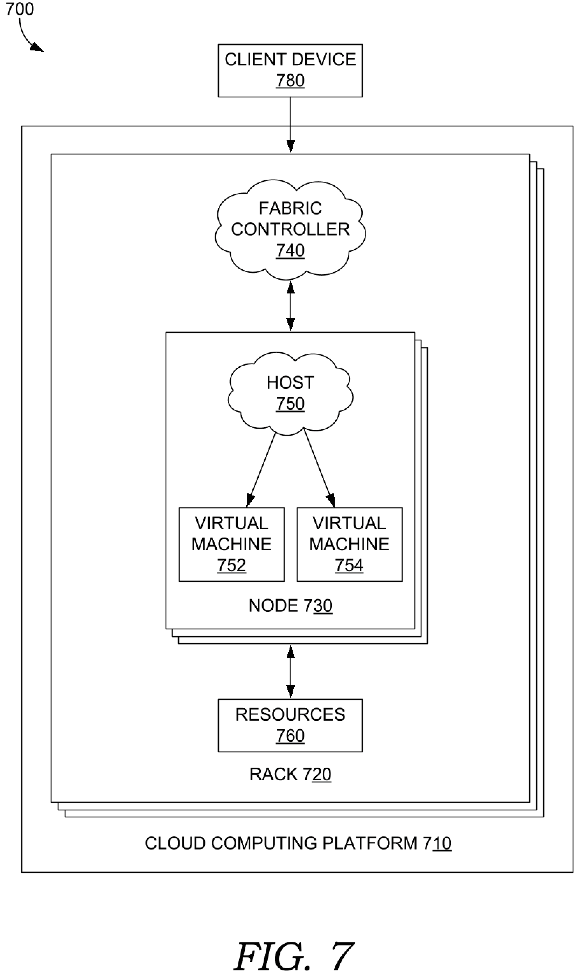

Referring now to FIG. 7, FIG. 7 illustrates an example distributed computing environment 700 in which implementations of the present disclosure may be employed. In particular, FIG. 7 shows a high-level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing platform 710 in a data center can be configured to host and support operation of endpoints of a particular service application. Cloud computing platform 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 800 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### Example Computing Environment

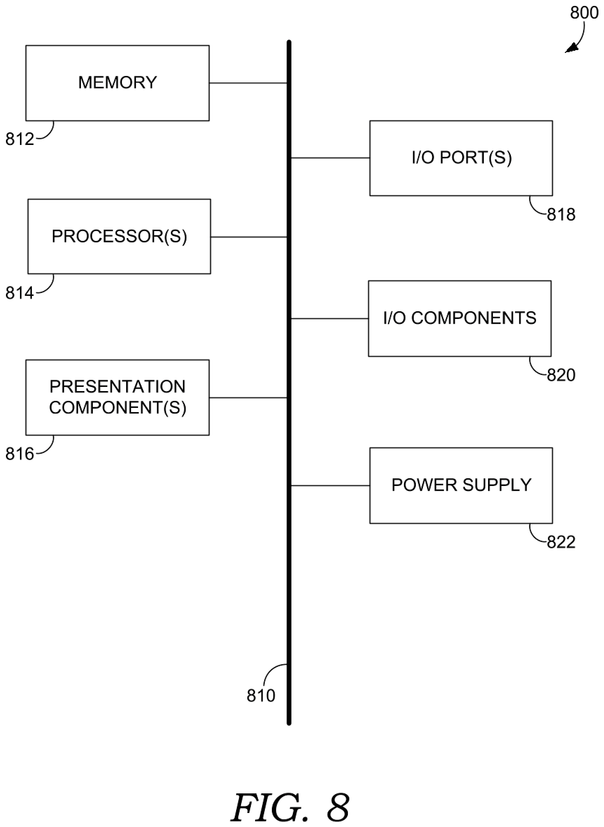

Having briefly described an overview of embodiments of the present invention, an example operating environment in which embodiments of the present invention may be implemented is described below in order to provide a general context for various aspects of the present invention. Referring initially to FIG. 8 in particular, an example operating environment for implementing embodiments of the present invention is shown and designated generally as computing device 800. Computing device 800 is but one example of a suitable computing environment and is not intended to suggest any limitation as to the scope of use or functionality of the invention. Neither should computing device 800 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art and reiterate that the diagram of FIG. 8 is merely illustrative of an example computing device that can be used in connection with one or more embodiments of the present invention. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present invention are described with reference to a distributed computing environment; however, the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present invention may generally refer to the technical solution environment and the schematics described herein, it is understood that the techniques described may be extended to other implementation contexts.

Embodiments of the present invention have been described in relation to particular embodiments which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects hereinabove set forth together with other advantages which are obvious, and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
configuring an interface automation script associated with a plurality of interface interactions with an interface, wherein the interface automation script supports embedding Application Programming Interfaces (APIs) for real-time interaction and real-time processing video processing;
integrating one or more video production engine API controls of a video production engine into the interface automation script;
using the one or more video production engine API controls, incorporating one or more video elements into the interface automation script;
based on the interface automation script, a real-time interaction and real-time video processing, triggering post-processing with a video processing adapter; and
based on post-processing, generating an output video.

2. The system of claim 1, wherein the video production engine automates video creation based on streamlining video recording, editing, dubbing, subtitling, and post processing using interface automation scripts that are integrated with a development toolkit, a video elements generator, and the video processing adapter.

3. The system of claim 1 or 2, wherein the video production engine comprises a software develop toolkit that supports the following:
initiating video recording within the interface;
inserting subtitle text into the output video at a specific time stamp;
temporarily pausing or resuming the output video recording to capture key transitions;
highlighting a specific area of content on the interface; and
stopping the video recording and saving a captured video file.

4. The system of any one of the preceding claims, wherein the video production engine comprises a video elements generator that supports dynamically generating the following video elements:
screen transitions that seamlessly integrate page navigation or UI changes;
subtitles from predefined script instructions; and
audio via text-to-speech engine or pre-recorded voiceovers synchronized with the interface automation script;
and/or
wherein the video production engine comprises the video processing adapter that supports video post-processing tasks via a service provider interface.

5. The system of any one of the preceding claims, wherein the video production engine supports precise synchronization of subtitles and dubbing with execution of the interface automation script, wherein the subtitles and audio are added at exact designated points in the output video.

6. The system of any one of the preceding claims, wherein the video production engine supports a script-based update mechanism, wherein an updated output video is generated based on modifying an existing interface automation script and regenerating video as the updated output video.

7. The system of any one of the preceding claims, wherein the video production engine operates without altering an underlying interface application, preserving an integrity of the underlying interface application while enabling dynamic content updates, wherein the interface automation script is a browser automation script, and the interface is a browser;
and/or
wherein the video production engine provides context-aware adjusting of subtitle placement and subtitle timing.

8. A computer-implemented method, the computer-implemented method comprising:
accessing an interface automation script, wherein the interface automation script is associated with an existing output video of a video production engine, wherein the interface automation script supports embedding Application Programming Interfaces (APIs) for real-time interaction and real-time processing video processing;
updating one or more video production engine Application Programming Interface (API) controls or one or more video elements in the interface automation script;
based on the interface automation script, a real-time interaction and real-time video processing, triggering post-processing with a video processing adapter; and
based on post-processing, generating an updated output video.

9. The computer-implemented method of claim 8, wherein the video production engine comprises a software develop toolkit that supports the following:
initiating video recording within the interface;
inserting subtitle text into the video at a specific time stamp;
temporarily pausing or resuming the video recording to capture key transitions;
highlighting a specific area of content on the interface; and
stopping the video recording and saving a captured video file;
and/or
wherein the video production engine comprises a video elements generator that supports dynamically generating the following video elements:
screen transitions that seamlessly integrate page navigation or UI changes;
subtitles from predefined script instructions; and
audio via text-to-speech engine or pre-recorded voiceovers synchronized with the interface automation script.

10. The computer-implemented method of claim 8 or 9, wherein the video production engine operates without altering an underlying interface application, preserving an integrity of the underlying interface application while enabling dynamic content updates, wherein the interface automation script is a browser automation script, and the interface is a browser;
and/or
wherein the video production engine supports precise synchronization of subtitles and dubbing with executing the interface automation script, wherein the subtitles and audio are added at exact designated points in the updated output video.

11. One or more computer-storage media having computer-executable instructions embodied thereon that, when executed by a computing system having a processor and memory, cause the processor to perform operations, the operations comprising:
communicating, to a video production engine, input associated with an interface automation script, the interface automation script is associated with a plurality of interface interactions with an interface, wherein the interface automation script supports embedding Application Programming Interfaces (APIs) for real-time interaction and real-time processing video processing;
based on communicating the input, receiving output video associated with the interface automation script, wherein the output video is generated based on a real-time interaction and real-time video processing that triggered post-processing using a video processing adapter associated with the output video; and
causing display of the output video.

12. The media of claim 11, wherein the video production engine automates video creation based on streamlining video recording, editing, dubbing, subtitling, and post processing using interface automation scripts that are integrated with a development toolkit, a video elements generator, and the video processing adapter.

13. The media of claim 11 or 12, wherein the video production engine comprises the video processing adapter that supports video post-processing tasks via a service provider interface.

14. The media of any one of claims 11 to 13, wherein the video production engine supports precise synchronization of subtitles and dubbing with the execution of the interface automation script, wherein the subtitles and audio are added at exact designated points in the output video.

15. The media of any one of claims 11 to 14, wherein the video production engine operates without altering an underlying interface application, preserving an integrity of the underlying interface application while enabling dynamic content updates, wherein the interface automation script is a browser automation script, and the interface is a browser;
and/or
wherein the video production engine provides context-aware adjusting of subtitle placement and subtitle timing.
